# EUROPEAN PATENT APPLICATION

(11) **EP 4 122 767 A1**
(43) Date of publication of application: **25.01.2023**
(21) Application number: 22183782.6
(22) Date of filing: 08.07.2022
(51) Int. Cl.: B60R 1/00, G06T 17/00, G06T 15/20, H04N 13/117, H04N 13/279

(54) **VEHICLE MIRROR IMAGE SIMULATION**

(30) Priority: 22.07.2021 US 202117383030
(71) Applicant: Continental Automotive Systems, Inc., Auburn Hills MI 48326 (US)
(72) Inventor: Cashen, Daniel, Auburn Hills, 48326 (US); Pech Aguilar, Esaias, Auburn Hills, 48326 (US)
(74) Representative: Continental Corporation

(57) **Abstract**

A method of providing image includes obtaining at least one first image of a surrounding area (52) from a first camera (26, 33, 38A, 38B, 40A, and 40B). At least one second image of the surrounding area (52) is obtained from a second camera (26, 33, 38A, 38B, 40A, and 40B). The at least one first image is fused with the at least one second image to generate a three-dimensional model (51) of the surrounding area (52). A first image (54A) of the three dimensional model is provided to a display by determining a first position of an operator. A second image (54B) of the three-dimensional model is provided to the display by determining when the operator is in a second position to simulate motion parallax.

## Description

### BACKGROUND

The present disclosure relates to providing an image on a display of a vehicle of a rear view from the vehicle. Vehicles currently can include a number of cameras that provide images of the area surrounding the vehicle on a display. The images of the surrounding area may be generated from a rear view camera or a side view camera that monitors a blind spot on the vehicle.

### SUMMARY

In one exemplary embodiment, a method of providing image includes obtaining at least one first image of a surrounding area from a first camera, At least one second image of the surrounding area is obtained from a second camera. The at least one first image is fused with the at least one second image to generate a three-dimensional model of the surrounding area. A first image of the three dimensional model is displayed to a display by determining a first position of an operator. A second image of the three-dimensional model is provided to the display by determining when the operator is in a second position to simulate motion parallax.

In another embodiment according to any of the previous embodiments, tracking information is received on the operator to determine when the operator is in the first position or in the second position

In another embodiment according to any of the previous embodiments, the tracking information includes an eye position of the operator.

In another embodiment according to any of the previous embodiments, the first image of the three-dimensional model is provided based on a first eye position of the operator. The second image is provided based on a second eye position of the operator.

In another embodiment according to any of the previous embodiments, the first camera is located on a first sideview mirror of a vehicle.

In another embodiment according to any of the previous embodiments, the second camera is located on a second sideview mirror of the vehicle.

In another embodiment according to any of the previous embodiments, at least one third image of the surrounding area is obtained from a third camera.

In another embodiment according to any of the previous embodiments, the at least one third image is fused with the at least one first image and the at least one second image to generate the three-dimensional model of the surrounding area.

In another embodiment according to any of the previous embodiments, the at least one third image is provided by the third camera from a location intermediate a first sideview mirror and a second sideview mirror.

In another embodiment according to any of the previous embodiments, the third image source is from a rear-view camera.

In another embodiment according to any of the previous embodiments, the first camera and the second camera are located on a first sideview mirror of a vehicle.

In another embodiment according to any of the previous embodiments, at least one third image is obtained from a third camera and at least one fourth image from a fourth image source.

In another embodiment according to any of the previous embodiments, the first camera and the second camera are located on a second sideview mirror of the vehicle.

In another embodiment according to any of the previous embodiments, the at least one third image and the at least one fourth image are fused with the at least one first image and the at least one second image to generate the three-dimensional model of the surrounding area.

In another exemplary embodiment, an image simulation assembly includes a first camera, a second camera and a controller are configured for obtaining at least one first image of a surrounding area from a first camera. At least one second image of the surrounding area is obtained from a second camera. The at least one first image is fused with the at least one second image to generate a three-dimensional model of the surrounding area. A first image of the three dimensional model is provided to a display by determining a first position of an operator. A second image of the three-dimensional model is provided to the display by determining when the operator is in a second position to simulate motion parallax.

In another embodiment according to any of the previous embodiments, tracking information on the operator is received to determine when the operator is in the first position or in the second position.

In another embodiment according to any of the previous embodiments, the tracking information includes an eye position of the operator.

In another embodiment according to any of the previous embodiments, the first image of the three-dimensional model is provided based on a first eye position of the operator. The second image is provided based on a second eye position of the operator.

In another embodiment according to any of the previous embodiments, the first camera is located on a first sideview mirror of a vehicle. The second camera is located on a second sideview mirror of the vehicle.

In another embodiment according to any of the previous embodiments, at least one third image of the surrounding area is obtained from a third camera.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a top view of an example vehicle.
Figure 2 illustrates a schematic view of a passenger cabin of the vehicle of Figure 1.
Figure 3 illustrates a schematic view of another example passenger cabin of the vehicle of Figure 1.
Figure 4 illustrates a schematic view an example mirror image simulation assembly with the passenger cabin of Figure 2.
Figure 5 illustrates a schematic view of another example mirror image simulation assembly with the passenger cabin of Figure 3.
Figure 6 illustrates an example method of providing an image.

### DESCRIPTION

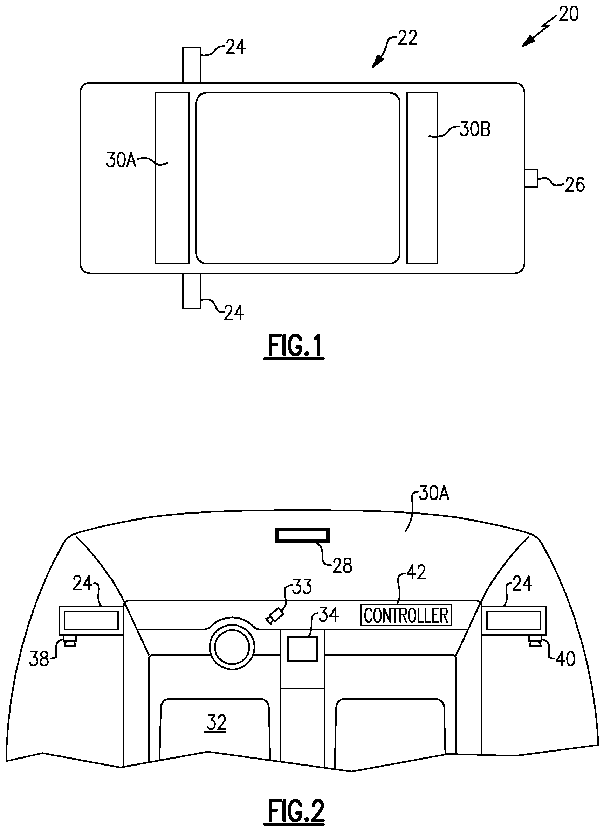

Vehicles include several features to improve visibility of the surrounding area to allow a driver to safely navigate along roads or along other driving surfaces. As shown in Figure 1, a vehicle 20 includes a pair of sideview mirrors 24 and a rear view camera 26 to allow passengers in a passenger cabin 22 in the vehicle 20 to have a view of the surrounding area and in particular, the area behind the vehicle 20. The passenger cabin 22 may also include a rear view mirror 28 (Figures 2-3) suspended from a front windshield 30A to see out of a rear window 30B of the vehicle 20.

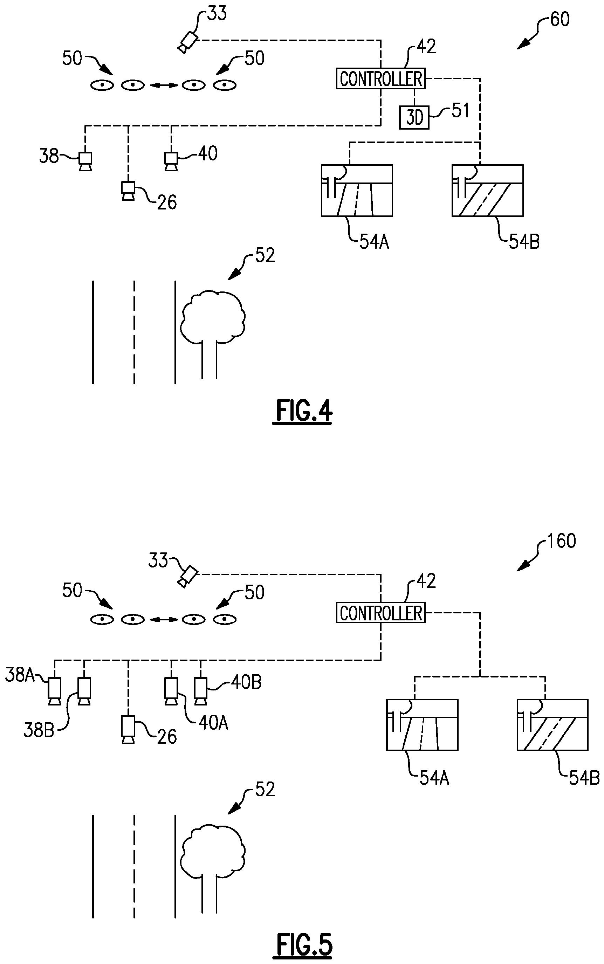

Figure 2 illustrates a perspective view of the passenger cabin 22. In the illustrated example, the passenger cabin 22 includes a view of the sideview mirrors 24 and the rear view mirror 28 from a driver's seat 32. A display 34 is located in a central portion of a dash 36 of the vehicle 20 to allow the operator in the driver's seat 32 to easily view the display 34 and any images projected thereon. The cabin 22 also includes an eye tracking camera 33 for tracking movement of the driver's eyes 50 (Figure 4) and or head to determine changes in position of the driver. The eye tracking camera 33 or similar device is currently in use on vehicles to track the driver's attention on the road while operating the vehicle 20.

In the illustrated example, the sideview mirrors 24 include a first camera 38 on a first one of the sideview mirrors 24 and a second camera 40 on a second one of the sideview mirrors 24. The cameras 26, 33, 38, and 40 and the display 34 are in electrical communication a controller 42 located in the vehicle 20. The controller 42 includes a processor and memory for performing the functions outlined below.

Figure 4 schematically illustrates an example of the mirror image simulation assembly 60. In the illustrated example, the mirror image simulation assembly 60 includes camera 26, 33, 38, and 40 and the controller 42. The controller 42 receives images of a surrounding area 52 the vehicle 20 with the cameras 26, 38, and 40 and stores those images in memory on the controller 42. The controller 42 can then fuse the images from the cameras 26, 38, and 40 to create a three dimensional model 51 of the field of view of the surrounding area 52. The images from the cameras 26, 38, and 40 are taken at the same time to increase the accuracy of the 3D model 51 of the field of view.

The controller 42 also receives position information from the eye tracking camera 33 in the passenger cabin 22 to monitor movement of the operator's eyes 50. Without the discloses system, an operator of a vehicle 20 may use the rear view mirror 28 to assess a position of objects in a field of view of the rear of the vehicle 20.

In order to improve depth perception with the rear view mirror 28 or sideview mirrors 24, the operator may move his or her head in a side to side motion to see how a perception of the objects in the surrounding area 52 changes to help judge distance. The amount of motion may only be 1-9 inches (2.54-22.86 cm). However, when viewing rear view images on the display 34 in the dash of a traditional vehicle 20, the rear view image does not change based on a position of the operator viewing the image. The controller 42 monitors position of the operator's head or eyes 50 and uses that information to provide differing rear view images 54A, 54B based on the determined position. In particular, the operator may perform the same side to side movement when looking at the display 34 as when looking at the rear view mirror 28 or side view mirrors 24 to obtain a greater sense of depth of the objects in the surrounding area 52. The controller 42 is therefore able to simulate motion parallax on the display 34 based at least on a position of the operator. The controller 42 can then display the proper simulated image 54A or 54B of the 3D model 51 based on operator position.

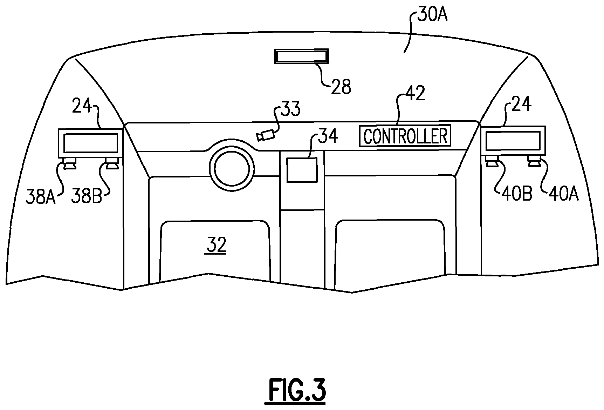

Figure 3 illustrates a perspective of the passenger cabin 22 incorporating a mirror image simulation assembly 160 that is similar to the mirror image simulation assembly 60 except where described below or shown in the Figures. Corresponding reference numerals are used between the assemblies 60 and 160 to identify similar or corresponding elements.

The passenger cabin 22 includes a view of the sideview mirrors 24 and the rear view mirror 28 from the driver's seat 32. In the illustrated example, the display 34 is located in a central portion of the dash 36 of the vehicle 20 to allow the operator in the driver's seat 32 to easily view the display 34 and any images projected thereon. The cabin 22 also includes the eye tracking camera 33 for tracking movement of the driver's eyes 50 and or head to determine changes in position.

The sideview mirrors 24 also include a first pair of cameras 38A, 38B on a first one of the sideview mirrors 24 and a second pair of cameras 40A, 40B on a second one of the sideview mirrors 24. The cameras 26, 33, 38A, 38B, 40A, and 40B and the display 34 are in electrical communication to the controller 42 located in the vehicle 20.

Figure 5 schematically illustrates an example of the mirror image simulation assembly 160. In the illustrated example, the mirror image simulation assembly 60 includes camera 26, 33, 38A, 38B, 40A, and 40B and the controller 42. With a greater number of cameras, the assembly 160 can fuse different combinations of the images from the cameras 26, 33, 38A, 38B, 40A, and 40B to create the 3D model 51. For example, the controller 42 can generate a 3D model 51 with just the cameras 38A, 38B to show a view from a first side of the vehicle 20 or the cameras 40A, 40B to show a view of the second side of the vehicle 20. Alternatively, the controller can choose one or more images from the cameras 38A, 38B, the cameras 40A, 40B, and or the rear view camera 26 to create a 3D model with a larger field of view of the surrounding area 52.

The mirror image simulation assemblies 60 and 160 provide improved image simulation of the surrounding area 52 by simulating motion parallax for the driver of the vehicle 20. Motion parallax provides the operator of the vehicle 20 with improved depth perception of the objects being shown in the display 34. In particular, the assemblies 60 and 160 provide improved motion parallax with the display 34 being a traditional display found in vehicles with a pixel density of between 50 and 200 PPI

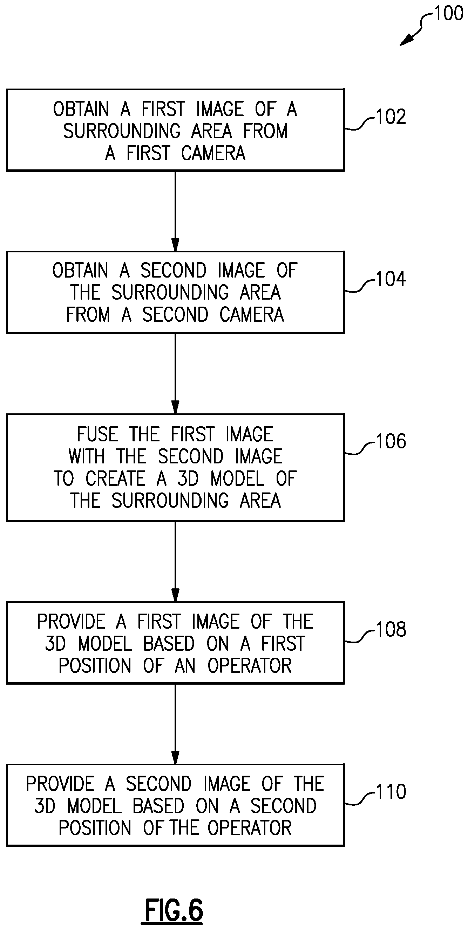

Figure 6 illustrates a method 100 of simulating motion parallax. The method 100 includes obtaining at least one first image of the surrounding area 52 from a first image source and obtaining at least one second image of the surrounding area 52 from a second image source (Blocks 102 and 104). In the case of the assembly 60, the first image may be provided from one of the cameras 26, 38, and 40 and the second image may be provided from another one of the cameras 26, 38, and 40. Additionally, it is possible that a third image could be obtained such that each of the cameras 26, 38 and 40 provide an image to the controller 42. The third image may be intermediate the first and second images, such as from the rear view camera 26.

Similarly, in the case of the assembly 160, the first image may be obtained from the camera 38A and the second image may be obtained by the camera 38B or the first image may be obtained from the camera 40A and the second image may be obtained by the camera 40B. Alternatively , the first image may be obtained from one of the cameras 38A, 38B and the second image may be obtained from the cameras 40A, 40B. Additionally, it is possible that a third, fourth, or fifth image can be provided by one of the cameras 26, 38A, 38B, 40A, or 40B that has not already provided one of the first or second images to the controller 42.

Once, the first and second images have been obtained by the controller 42, the controller 42 fuses the images the images to generate the three-dimensional model 51 of the surrounding area 52 (Block 106).

The controller 42 monitors a position of the driver's eyes 50 or head and provide a first view of the 3D model 51 to the display 34 when the operator is in a first position (Block 108) and provide a second view of the 3D model 51 to the display 34 when the operator is in a second position (Block 110). The controller 42 determines when the operator is in the first portion or the section position by receiving images from the camera 33 that the controller 42 can use to determine the eye 50 and/or head position. In particular, the images collected from the camera 33 can be used to determine when the driver is looking at the display 34 projecting the rear view image and then provide the simulated rear view image 54A, 54B as the operator moves his or her head accordingly.

One feature of providing the first and second rear view images 54A, 54B with differing views of the 3D model 51 is a simulation of motion parallax as described above to improve the operator's depth perception of the surrounding area 52. The simulation of motion parallax for the operator provides improved usability of the rear view image on the display 34 over traditional rear view images that only project static images and do not project different images 54 based on position.

Although the different non-limiting examples are illustrated as having specific components, the examples of this disclosure are not limited to those particular combinations. It is possible to use some of the components or features from any of the non-limiting examples in combination with features or components from any of the other non-limiting examples.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claim should be studied to determine the true scope and content of this disclosure.

## Claims

1. A method of providing image, comprising:
obtaining at least one first image of a surrounding area (52) from a first camera (26, 33, 38A, 38B, 40A, and 40B);
obtaining at least one second image of the surrounding area (52) from a second camera (26, 33, 38A, 38B, 40A, and 40B);
**characterized in that**:
fusing the at least one first image with the at least one second image to generate a three-dimensional model (51) of the surrounding area (52);
providing a first image of the three dimensional model to a display by determining a first position of an operator; and
providing a second image of the three-dimensional model to the display by determining when the operator is in a second position to simulate motion parallax.

2. The method of claim 1, wherein determining when the operator is in the first position or in the second position includes receiving tracking information on the operator.

3. The method of claim 2, wherein the tracking information includes an eye position of the operator.

4. The method of one of claims 1 to 3, where the first image of the three-dimensional model is provided based on a first eye position of the operator and the second image is provided based on a second eye position of the operator.

5. The method of one of the preceding claims, including obtaining at least one third image of the surrounding area (52) from a third camera (26, 33, 38A, 38B, 40A, and 40B).

6. The method of claim 5, wherein the at least one third image is fused with the at least one first image and the at least one second image to generate the three-dimensional model of the surrounding area.

7. The method of one of claims 5 or 6, wherein the at least one third image is provided by the third camera (26) from a location intermediate a first sideview mirror (24) and a second sideview mirror (24).

8. The method of one of claims 5 to 7, wherein the third image source is from a rear-view camera (26).

9. The method of claim 1, including obtaining at least one third image from a third camera (26, 33, 38A, 38B, 40A, and 40B) and at least one fourth image from a fourth image source (26, 33, 38A, 38B, 40A, and 40B).

10. The method of claim 9, wherein the at least one third image and the at least one fourth image are fused with the at least one first image and the at least one second image to generate the three-dimensional model (51) of the surrounding area (52).

11. An image simulation assembly comprising:
a first camera;
a second camera; and
a controller configured for:
obtaining at least one first image of a surrounding area (52) from a first camera (26, 33, 38A, 38B, 40A, and 40B);
obtaining at least one second image of the surrounding area (52) from a second camera (26, 33, 38A, 38B, 40A, and 40B);
**characterized in that**:
fusing the at least one first image with the at least one second image to generate a three-dimensional model (51) of the surrounding area (52);
providing a first image (54A) of the three dimensional model to a display by determining a first position of an operator; and
providing a second image (54B) of the three-dimensional model to the display by determining when the operator is in a second position to simulate motion parallax.

12. The assembly of claim 11, wherein the first camera (38, 38A, 38B) is located on a first sideview mirror (24) of a vehicle (20).

13. The assembly of one of claims 11 or 12, wherein the second camera (40, 40A, 40B) is located on a second sideview mirror (24) of the vehicle (20).

14. The assembly of claim 11, wherein the first camera (33, 38A, 38B, 40A, and 40B) and the second camera (33, 38A, 38B, 40A, and 40B) are located on a first sideview mirror (24) of a vehicle (20).

15. The assembly of claim 11, wherein the first camera (33, 38A, 38B, 40A, and 40B) and the second camera (33, 38A, 38B, 40A, and 40B) are located on a second sideview mirror (24) of the vehicle (20).
